Europäisches Patentamt

European Patent Office

Office européen des brevets

(11) Publication number: **0 310 844 B1**

## EUROPEAN PATENT SPECIFICATION

(45) Date of publication of patent specification: **05.08.92**   (51) Int. Cl.⁵: **B60C 25/132**

(21) Application number: **88115283.9**

(22) Date of filing: **17.09.88**

(54) **Apparatus for mounting and dismounting of tyres.**

(30) Priority: **05.10.87 DK 5204/87**

(43) Date of publication of application:
**12.04.89 Bulletin   89/15**

(45) Publication of the grant of the patent:
**05.08.92 Bulletin   92/32**

(84) Designated Contracting States:
**AT BE CH DE ES FR GB GR IT LI NL SE**

(56) References cited:
**FR-A- 2 491 837**
**US-A- 2 801 684**
**US-A- 2 903 050**
**US-A- 4 425 954**

(73) Proprietor: **Pedersen, Ejner**
**Bryndumvej 205**
**DK-6715 Esbjerg N.(DK)**

(72) Inventor: **Pedersen, Ejner**
**Bryndumvej 205**
**DK-6715 Esbjerg N.(DK)**

(74) Representative: **Koepsell, Helmut, Dipl.-Ing.**
**Mittelstrasse 7**
**W-5000 Köln 1(DE)**

## Description

The invention relates to an apparatus for mounting and dismounting of tyres, and as further defined of the type specified in the introduction to claim 1.

In a prior art apparatus for mounting and dismounting of tyres the wheel is fixed to a horizontal shaft resting on an adjustable machine frame. During slow rotation the tyre bead is machined by means of an bead wire tool designed for this purpose, either in the form of a wedge-shaped chisel or a rotatable pressure plate depending on whether the tyre is to be mounted or dismounted. The bead wire tool is mounted on an adjustable arm on the machine frame. To fix the wheel to the shaft, the latter is provided with a universal chuck which by means of a number of radial claws or arms can be set to different wheel diameters and rim shapes.

The apparatus is designed for stationary set-up in a garage so that in any case a change of tyre or mending of a puncture will require that the wheel is dismounted from the vehicle and brought to the garage. Mobile use of the apparatus is not possible. In many cases it will, however, be both faster and, from a working point of view, more practical if tyre change or puncture mending could be carried out locally, especially when it is a matter of large unhandy wheels such as tractor wheels, construction machinery wheels and lorry wheels.

It is tried to remedy this defect through the present invention the object of which is to provide a mobile, very handy apparatus allowing mounting work directly on the spot while the wheel is fixed to the vehicle or has been dismounted.

A known apparatus according to the preamble of claim 1 is shown, e.g. in US-A-2 903 050.

The apparatus according to the invention which comprises the features of claim 1, is characterised in having a double set of tyre levers which by the use of two associated squeezing devices acting directly on the rim edge can 'step' along the rim, i.e. move step by step, by opening and closing the two squeezing devices alternately, the distance between the tyre levers being increased and reduced alternately at the same time. During this stepwise movement the tyre levers advance between the rim edge and the bead wire, thus causing the bead wire to be forced inside or outside the rim depending on whether the tyre is to be mounted or dismounted.

The apparatus fits all wheel sizes directly and can be brought everywhere, e.g. on a service van. The apparatus is fast and uncomplicated to use. The apparatus can be arranged expediently for pneumatic operation as compressor equipment is available or brought along wherever tyres are serviced.

An embodiment as specified in claim 2 results in a very compact structure of the apparatus and also a constructional solution containing as few parts as possible. Building the main cylinder into the claw mechanism such as specified in claim 3 also gives optimum utilization of the cylinder force.

The various movements of the apparatus (cylinders) is performed expediently by means of a central control valve common to both main cylinder and squeeze cylinder. The control valve is designed for manual operation and gives the operator a valuable sense and control of the movements of the apparatus. Besides, the solution is simple and reliable. The control valve is mounted directly on the apparatus.

As an alternative to the manually operated control valve the apparatus can be arranged with valve equipment for automatic sequential control of the various movement functions.

In what follows, the invention is described in detail relative to the drawing where

Fig. 1     shows a tyre mounting apparatus according to the invention, viewed askew in perspective,

Fig. 2     the same apparatus viewed from one side in a simplified version, with the claw mechanism shown in open position,

Fig. 3     the same apparatus shown in closed position,

Fig. 4     a separate view of the squeeze device, and

Fig. 5     a schematic cross section showing the function of one tyre lever and the associated squeeze mechanism during dismounting of a tyre.

In the embodiment shown on the drawing the tyre mounting apparatus mainly consists of a claw-shaped mechanism including two legs 1 with associated hinge parts 2, a pneumatic cylinder (main cylinder) 3 built in between the claw legs with a piston rod 3a and a forked end 4, a tyre lever 5 fixed at right angles to the free end of either claw leg, and connected to either tyre lever a squeeze cylinder 6 with a holder-on 7. The apparatus also includes a pneumatic control valve 18 common to the three cylinders 3 and 6 and a rear handle 9 (i.e. turning away from the tyre levers).

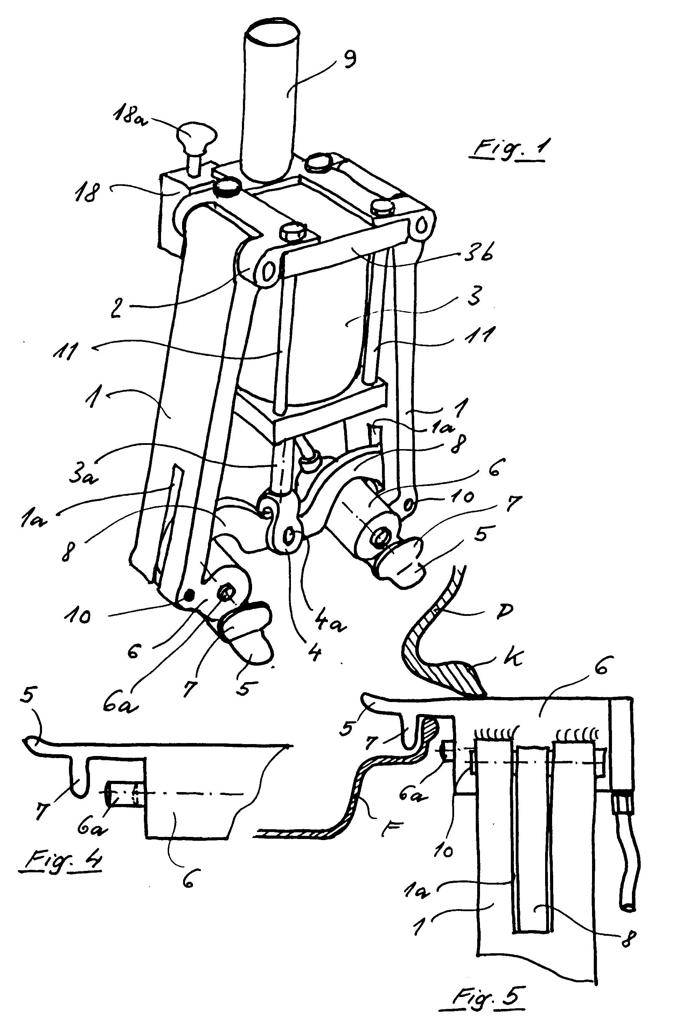

The main cylinder 3 actuates the claw legs 1 via an angle joint mechanism consisting of two angle joints 8 fitted between the forked end 4 and the legs 1. The angle joints have a common joint 4a in the forked end 4. The claw legs have slits 1a designed for the angle joints whose joint connections to the legs are indicated by 10. When the piston rod 3a moves out of the cylinder, the angle joints force the two legs 1 to move away from each other, and vice versa when the piston rod is retracted (Fig. 3 and Fig. 2 respectively).

The hinges 2 of the claw legs are bolted to the outside of the bottom part 3b of the main cylinder by means of the stay bolts 11 of the cylinder. The hinges form the swivel bearings of the legs.

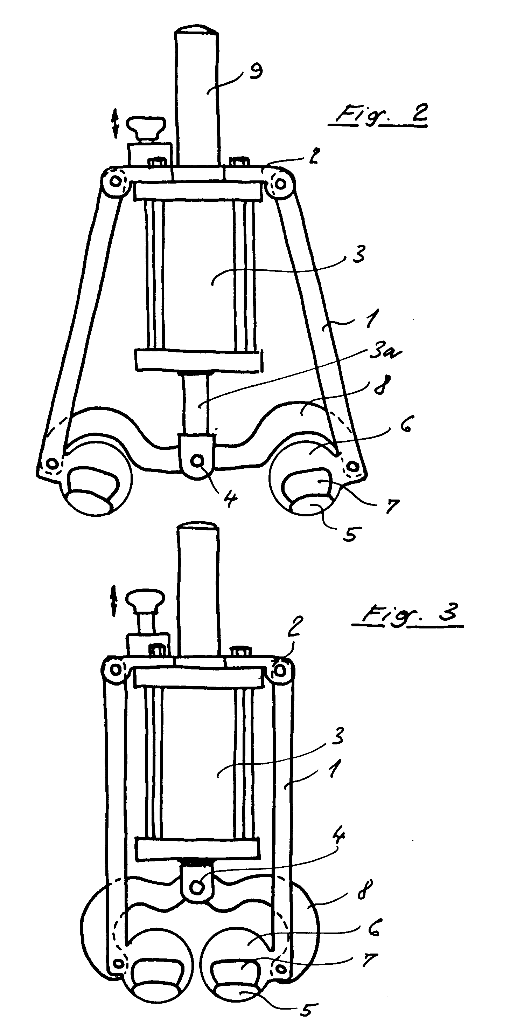

The squeeze cylinders 6 and the tyre levers 5 are designed two and two as integrated units welded to the end of the claw legs. The tyre lever 5 is an extension opposite to the cylinder parallel to the piston rod 6a, but at some distance from it. On one side of the tyre lever, at some distance in front of the piston rod 6a, a rounded angularly projecting nose is welded on and forms the holder-on 7 for the cylinder. The tyre lever, the holder-on and the cylinder piston rod are adapted to the rim profile as shown in Fig. 5.

Activation of the squeeze cylinder 6 forces the piston rod 6a towards the rim F which is then held firmly between the holder-on 7 and the piston rod. In this way, the tyre lever of the cylinder is locked in position on the rim. When the cylinder is relieved of pressure again (a single action cylinder with spring return), the tyre lever is released. This process is in antiphase with the other squeeze cylinder and also synchronized with the reciprocating movement of the main cylinder so that in this way the tyre levers are made to 'crab' forward on the rim. During this movement the two tyre levers cause the bead wire of the tyre to be forced away from the rim, and depending on whether the bead wire is forced out or in relative to the rim at the same time, the tyre is dismounted and mounted respectively. The tyre can be guided sideways by manual efforts. In working position the handle 9 of the apparatus points to the wheel centre radially.

The three cylinders (main cylinder 3 and squeeze cylinders 6) are connected to a common 5/2 directional valve 18 mounted on the side of the main cylinder (Fig. 2). The valve has a handle 18a for manual operation. The apparatus has a relative weight and can be operated by a single person. The apparatus requires connection to a compressed air supply.

It will be understood that the leading principle of the present invention lies in the tyre levers and their associated squeeze mechanism which can mount and dismount tyres during propulsion on the rim.

## Claims

1. An apparatus for mounting and dismounting of tyres (D), which apparatus is based on a principle according to which a wedge-shaped device (tyre lever 5) is forced in between the rim edge (F) and the bead wire (K) of the tyre to force the bead wire inside or outside the rim edge by a relative movement along the rim edge, consisting mainly of
   a) two interconnected tyre levers (5),
   b) a hinged or another type of movable connection between the two tyre levers, and
   c) a pneumatic cylinder (3) or a similar actuator inserted between the two tyre levers characterized in that either of the tyre levers (5) is fitted with an associated squeeze mechanism (6,7) which is arranged to clamp the rim edge (F) when activated by a pneumatic force, and in that the cylinder (3) produces an alternate movement of the levers towards and away from each other, at the same time as the two squeeze mechanisms (6,7) are tightened and loosened synchronously herewith, but in mutual antiphase.

2. An apparatus as claimed in claim 1, characterized in that the hinged connection between the two tyre levers has the shape of a claw (1) with the tyre levers placed at the ends of the two legs of the claw and with a double-acting cylinder (3) inserted between the legs to move these towards or away from each other.

3. An apparatus as claimed in claim 2, characterized in that the cylinder (3) forms the basis for the hinge joint (2) through its cylinder bottom part (3b) and with the piston rod (3a) connected to the angle-joint mechanism (8) inserted between the legs (1).

4. An apparatus as claimed in claim 1, characterized in that either of the two squeeze mechanisms is formed by a short cylinder (6) whose piston rod (6a) acts at right angles to the rim edge (K) and in combination with a hook-shaped nose (7) on the respective tyre lever (5) which nose, with the apparatus in working position on the wheel, grips behind the rim edge directly opposite to the cylinder (6), whereby the nose and piston rod jointly grip firmly on the rim edge when the cylinder is activated.

5. An apparatus as claimed in claims 1-4, characterized in that the claw cylinder (3) and the squeeze cylinders (6) are connected to a common valve (18) which is mounted directly on the apparatus and arranged to reverse the main cylinder when actuated manually and at the same time to tighten and loosen the two squeeze cylinders in the mutual antiphase mentioned.

6. An apparatus as claimed in claim 5, characterized in that the apparatus is portable and operated by compressed air.

## Revendications

1. Appareil pour monter et démonter des pneus (D), lequel appareil est basé sur le principe consistant à faire pénétrer un organe profilé en coin (levier de prise (5) sur le pneu) entre le bord de la jante (F) et la lèvre de la tringle (K) du pneu, pour engager la tringle dans le bord de la jante ou l'en dégager en déplaçant le levier le long du bord de la jante, cet appareil comportant essentiellement:

    a) deux leviers de prise (5) interconnectés,

    b) un système de liaison mobile articulé ou analogue entre les deux leviers de prise sur le pneu,

    c) et un vérin pneumatique (3) ou un organe d'actionnement analogue monté entre des deux leviers de prise.

    caractérisé en ce que chacun des deux leviers de prise (5) sur le pneu est associé à un mécanisme de serrage (6, 7) prévue pour pincer le bord de la jante (F) lorsqu'on l'actionne au moyen d'une source d'énergie pneumatique, et en ce que le vérin (3) provoque un mouvement alternatif des leviers de prise pour que ces leviers se rapprochent et s'écartent l'un de l'autre, les deux mécanismes de serrage (6, 7) étant mis en même temps en position de serrage et de desserrage en synchronisme avec ce mouvement, mais en opposition de phase l'un par rapport à l'autre.

2. Appareil selon la revendication 1, caractérisé en ce que la liaison articulée entre les deux leviers de prise sur le pneu est constituée par une mâchoire (1) à deux branches dont les extrémités portent les leviers de prise, un vérin à double effet (3) étant monté entre les deux branches pour rapprocher celles-ci ou les écarter l'une de l'autre.

3. Appareil selon la revendication 2, caractérisé en ce que le corps du vérin (3) sert de base pour le joint articulé (2) qui est monté sur le fond (3b) du corps du vérin, la tige de piston (3a) du vérin étant reliée au mécanisme de variation d'obliquité (8) et disposée entre les branches (1).

4. Appareil selon la revendication 1, caractérisé en ce que chacun des deux mécanismes de serrage est constitué par un vérin court (6) dont la tige de piston (6a) agit perpendiculairement au bord (F) de la jante et en combinaison avec un bec en forme de crochet (7) prévu sur le levier de prise correspondant (5), ce bec, lorsque l'appareil est en position de travail sur la roue, venant en prise derrière le bord de la jante dans one position directement opposée au vérin (6), le bec et la tige de piston du vérin coopérant ainsi pour pincer énergiquement le bord de la jante lorsqu'on actionne le vérin.

5. Appareil selon les revendications 1 à 4, caractérisé en ce que le vérin (3) de manoeuvre de la mâchoire et les deux vérins de serrage (6) sont reliés à une soupape commune (18) qui est montée directement sur l'appareil et qui est prévue, lorsqu'on agit à la main sur cette soupape, pour commander un mouvement de va-et-vient du vérin principal et en même temps pour mettre les vérins de serrage en position de serrage et de desserrage dans le régime d'opposition de phase mutuelle précité.

6. Appareil selon la revendication 5, caractérisé en ce qu'il est portatif et fonctionne à l'air comprimé.

## Patentansprüche

1. Vorrichtung zum Montieren und Demontieren von Luftreifen (D), die auf einem Prinzip beruht, gemäß welchem ein keilförmiges Gerät (Reifenhebel 5) zwischen die Felgenkante (F) und den Drahtkern (K) des Reifens gedrückt wird, um den Drahtkern durch eine relative Bewegung entlang der Felgenkante in die Felgenkante hinein oder aus dieser herauszudrükken, wobei die Vorrichtung im wesentlichen besteht aus

    a) zwei miteinander verbundene Reifenhebeln (5),

    b) einer gelenkig oder einer in anderer Weise ausgebildeten bewegbaren Verbindung zwischen den beiden Reifenhebeln und

    c) einem pneumatischen Zylinder (3) oder einem ähnlichen Betätigungsmittel, das zwischen den beiden Reifenhebeln eingefügt ist,

    dadurch gekennzeichnet, daß jeder der Reifenhebel (5) mit einem zugeordneten Preßmechanismus (6, 7) versehen ist, der so angeordnet ist, daß die Felgenkante (F) einklemmt, wenn er durch eine pneumatische Kraft betätigt wird, wobei der Zylinder (3) eine alternierende Bewegung der Hebel aufeinander zu und voneinander weg bewirkt und gleichzeitig die beiden Preßmechanismen (6, 7) damit synchron, jedoch zueinander gegenphasig gespannt und gelöst werden.

2. Vorrichtung nach Anspruch 1, dadurch gekennzeichnet, daß die gelenkige Verbindung zwischen den beiden Reifenhebeln die Form einer Klaue (1) aufweist, wobei die Reifenhebel am Ende der beiden Schenkel der Klaue angebracht sind und ein doppelt wirkender Zylinder (3) zwischen den Schenkeln eingefügt ist, um letztere aufeinander zu oder voneinander weg zu bewegen.

3. Vorrichtung nach Anspruch 2, dadurch gekennzeichnet, daß der Zylinder (3) die Basis für die gelenkige Verbindung (2) durch sein Zylinder-Bodenteil (3b) bildet, und die Kolbenstange (3a) mit dem zwischen den Schenkeln (1) eingefügten Kniehebel-Mechanismus (8) verbunden ist.

4. Vorrichtung nach Anspruch 1, dadurch gekennzeichnet, daß jeder der beiden Preßmechanismen durch einen kurzen Zylinder (6) gebildet wird, dessen Kolbenstange (6a) rechtwinklig zur Felgenkante (K) und in Kombination mit einer hakenförmigen Nase (7) an dem jeweiligen Reifenhebel (5) wirksam ist, wobei die Nase bei in Arbeitsposition am Rad befindlicher Vorrichtung, hinter die Felgenkante direkt gegenüber dem Zylinder (6) greift und Nase und Kolbenstange zusammen die Felgenkante fest ergreifen, wenn der Zylinder beaufschlagt wird.

5. Vorrichtung nach Ansprüchen 1 bis 4, dadurch gekennzeichnet, daß der Klauenzylinder (3) und die Preßzylinder (6) mit einem gemeinsamen Ventil (18) verbunden sind, welches direkt auf der Vorrichtung angebracht ist und dazu dient, den Hauptzylinder, wenn handbetätigt, umzukehren und gleichzeitig die beiden Preßzylinder zueinander gegenphasig zu spannen und zu lösen.

6. Vorrichtung nach Anspruch 5, dadurch gekennzeichnete, daß die Vorrichtung tragbar ist und durch Druckluft betrieben wird.

*Fig._1*

*Fig._4*

*Fig. 5*

Fig. 2

Fig. 3